# EUROPEAN PATENT SPECIFICATION

(11) **EP 3 678 489 B1**
(45) Date of publication and mention of the grant of the patent: **24.01.2024**
(21) Application number: 19795569.3
(22) Date of filing: 02.11.2019
(51) Int. Cl.: A21D 8/02, A21C 14/00, A21D 6/00, A23L 5/10

(54) **DOUGH RELAXATION**
TEIGENTSPANNUNG
RELAXATION DE LA PÂTE

(30) Priority: 02.11.2018 EP 18204169
(43) Date of publication of application: 15.07.2020
(73) Proprietor: Technische Universität München, 80333 München (DE)
(72) Inventor: BECKER, Thomas, 85111 Adelschlag (DE); JEKLE, Mario, 73240 Wendlingen am Neckar (DE); BRANDNER, Silvia, 85354 Freising (DE)
(74) Representative: Koplin, Moritz
(86) International application number: PCT/EP2019/080007
(87) International publication number: WO 2020/089476

(56) References cited:
- JP-A- 2001 204 374
- RU-C2- 2 175 839
- US-A- 4 592 273
- OZLEM OZMUTLU ET AL: "Assessment of proofing of bread dough in the microwave oven", EUROPEAN FOOD RESEARCH AND TECHNOLOGY, vol. 212, no. 4, 7 March 2001 (2001-03-07) , pages 487-490, XP055573019, Berlin/Heidelberg ISSN: 1438-2377, DOI: 10.1007/s002170000276

## Description

### FIELD

The present disclosure relates to reducing the time required for dough processing by speeding-up dough relaxation.

### BACKGROUND

Ozlem Ozmutlu et al: "Assessment of proofing of bread dough in the microwave ofen", European Food research and Technology, vol. 212, no. 4, 7 March 2001, pages 487-490, Berlin/Heidelberg, investigates the effects of different proofing times in the microwave oven on the quality of microwave baked breads. It was found that when emulsifiers were added, the optimum proofing condition in the microwave oven is 6 minutes at 10% power.

JP 2001 204374A teaches controlling a dough temperature by alternating or direct current applied to the dough through electrode rollers.

RU 2 175 839 C2 relates to proofing and baking bread at a voltage of 36V and 220V, respectively, under a pressure of 40kPa.

US 4,592,274 suggests a belt conveyor with compartments having a pair of electrically conductive plates and baking the dough by passing an electric current through the dough.

When handling dough which comprises gluten for producing baked goods, the dough requires periods of rest between process steps in which mechanical force is exerted on the dough. The periods of rest cause dough relaxation, as the conformation of the dough proteins undergoes a change which decreases the resistance of the dough against deformation.

### SUMMARY

The present invention provides a method of reducing a time required for processing a dough which comprises gluten and which is provided for producing baked goods by speeding-up dough relaxation, a dough relaxation device and a system employing said device.

The method comprises a step of exerting mechanical force on the dough, decreasing a resistance of the dough against deformation after or during said step of exerting mechanical force on the dough by applying an electromagnetic field to the dough, another step of exerting mechanical force on the dough after applying the electromagnetic field to the dough and baking the dough after said other step of exerting mechanical force on the dough, wherein the steps of exerting mechanical force on the dough are selected from a group consisting of kneading, shaping and dividing the dough, wherein the electromagnetic field is applied to the dough for a period of less than 30 s, preferably of less than 15 s, and more preferably of less than 5 s and wherein the dough rests less than 10 minutes, preferably less than 5 minutes, and more preferably less than 1 minute between the steps of exerting mechanical force on the dough.

Applying an electromagnetic field to the dough may comprise applying an alternating electromagnetic field to the dough. In this regard, the term "dough", as used throughout the description and the claims, particularly refers to a mixture comprising water and gluten (e.g., wheat flour). Moreover, the formulation "resistance of the dough against deformation", as used throughout the description and the claims, particularly refers to the elastic properties of the dough. In addition, the term "shaping", as used throughout the description and the claims, includes laminating the dough.

The alternating electromagnetic field may have an amplitude in a range of 0.1 kV/m to 5 kV/m, preferably in a range of 0.8 kV/m to 3 kV/m, and the alternating electromagnetic field may have a frequency of 20 Hz or more, of 50Hz or more, of 100 Hz or more, of 500 Hz or more, of 1 kHz or more, of 1 MHz or more, or of 1 GHz or more.

Applying an alternating electromagnetic field to the dough may comprise supplying an alternating voltage or an alternating current to electrodes which are in mechanical contact with the dough.

An amplitude of the alternating voltage may be between 10 V and 500 V, preferably between 80 V and 300 V. An amplitude of the alternating current may be between 0.1 A and 10 A, preferably between 0.5 A and 5.2 A.

Baking the dough may be performed by heating the dough through hot air at least partially surrounding the dough.

The method may further comprise measuring the resistance of the dough against deformation and controlling the (alternating) electromagnetic field based on the measured resistance. Controlling the alternating electromagnetic field based on the measured resistance may comprise determining a parameter selected from the group consisting of an amplitude of the electromagnetic field, a frequency of the electromagnetic field and a duration for which the electromagnetic field is applied to the dough.

The dough may rest less than 10 minutes, preferably less than 5 minutes, and more preferably less than 1 minute between the steps of exerting mechanical force on the dough.

The (alternating) electromagnetic field or the voltage or the current may be applied to the dough for a period of less than 1 s, preferably of less than 0.1 s, and more preferably of less than 0.01 s.

The extensibility of the dough may be decreased by the step of exerting mechanical force on the dough by a value A and increased by the step of applying an (alternating) electromagnetic field or by supplying a voltage or a current to the dough by a value B, wherein B is more than 50 %, preferably more than 75 %, and more preferably more than 90 % of A.

The dough relaxation device comprises two electrodes, wherein the dough relaxation device is configured to decrease the resistance of a dough which comprises gluten against deformation by applying an electromagnetic field to the dough, wherein the dough relaxation device is configured to apply the electromagnetic field for a period of less than 30 s, preferably of less than 15 s, and more preferably of less than 5 s.

The dough relaxation device may be configured to apply an alternating electromagnetic field to the dough.

The alternating electromagnetic field may have an amplitude in a range of 0.1 kV/m to 5 kV/m, preferably in a range of 0,8 kV/m to 3 kV/m.

The alternating electromagnetic field may have a frequency of 20 Hz or more, of 50Hz or more, of 100 Hz or more, of 500 Hz or more, of 1 kHz or more, of 1 MHz or more, or of 1 GHz or more.

The dough relaxation device may be configured to supply an alternating voltage or an alternating current to the two electrodes.

An amplitude of the voltage may be between 10 V and 500 V, preferably between 80 V and 300 V. An amplitude of the current may be between 0.1 A and 10 A, preferably between 0.5 A and 5.2 A.

The dough relaxation device may be configured to apply the electromagnetic field or the voltage or the current to the dough for a period of less than 30 s, preferably of less than 15 s, and more preferably of less than 5 s.

The dough relaxation device may be configured to apply the (alternating) electromagnetic field to the dough 16 for a period of less than 1 s, preferably of less than 0.1 s, and more preferably of less than 0.01 s.

The system for producing baked goods comprises a dough relaxation device as described above and a dough kneader, shaper, or divider arranged upstream of the dough relaxation device, wherein the dough relaxation device is configured to increase an extensibility of the dough by a value B, wherein B is more than 50 %, preferably more than 75 %, and more preferably more than 90 % of an extensibility decrease A caused by the dough kneader, shaper, or divider.

The system may further comprise a sensor for measuring the resistance of the dough against deformation, wherein the dough relaxation device is configured to control the electromagnetic field based on the measured resistance.

The system may further comprise an oven wherein the system may be configured to produce baked goods containing gluten.

It will be appreciated that the features and attendant advantages of the disclosed system may be realized by the disclosed method and vice versa.

### BRIEF DESCRIPTION OF THE DRAWINGS

The foregoing aspects and many of the attendant advantages will become more readily appreciated as the same becomes better understood by reference to the following detailed description, when taken in conjunction with the accompanying drawings, wherein like reference numerals refer to like parts throughout the various views, unless otherwise specified.
Fig. 1 schematically illustrates components of a system for producing baked goods, according to a first example;
Fig. 2 schematically illustrates components of a system for producing baked goods, according to a second example;
Fig. 3a and Fig. 3b schematically illustrate components of a system for producing baked goods, according to a third example;
Fig. 4a schematically illustrates a dough relaxation device;
Fig. 4b schematically illustrates a modification of the dough relaxation device of Fig. 4a;
Fig. 4c schematically illustrates another modification of the dough relaxation device of Fig. 4a;
Fig. 4d schematically illustrates a modification of the dough relaxation device of Fig. 4b;
Fig. 4e schematically illustrates another modification of the dough relaxation device of Fig. 4a;
Fig. 4f schematically illustrates another modification of the dough relaxation device of Fig. 4b;
Fig. 5 shows a flow-chart of a method of reducing the time required for processing dough provided for producing baked goods by speeding-up dough relaxation;
Fig. 6 shows a diagram illustrating the effect of a period of rest on the ductility of the dough;
Fig. 7 shows a diagram illustrating the effect of the method on the ductility of the dough;
Fig. 8 shows a diagram illustrating the resistance of the dough against deformation during a rheological test;
Fig. 9 shows a diagram illustrating the effect of a period of rest on the relaxation halftime of the dough;
Fig. 10 shows a diagram illustrating the effect of the method on the relaxation halftime of the dough; and
Fig. 11 shows a diagram illustrating the effect of the method on the temperature of the dough.

Notably, the drawings are not drawn to scale and unless otherwise indicated, they are merely intended to conceptually illustrate the structures and procedures described herein.

### DETAILED DESCRIPTION

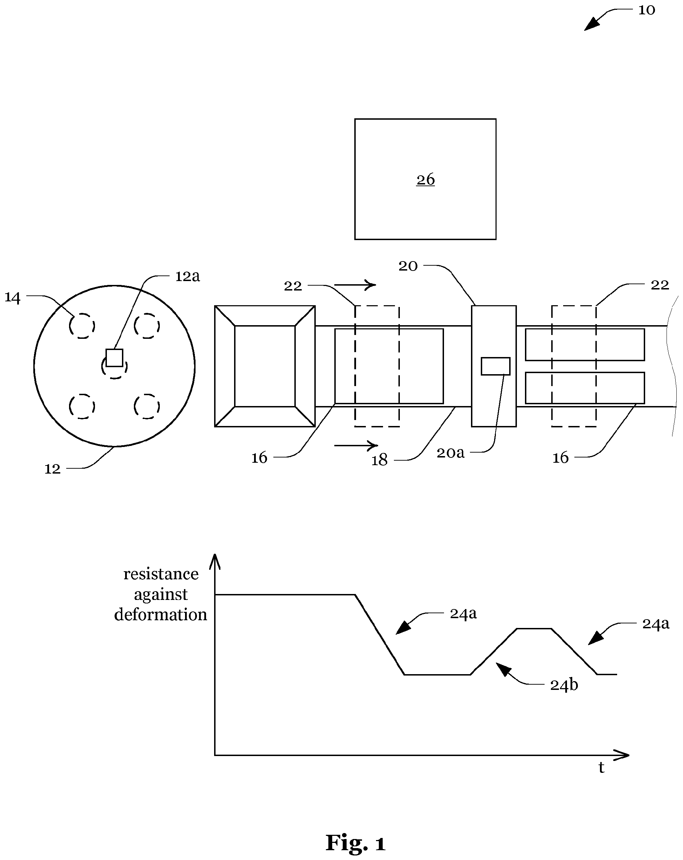

Fig. 1 schematically illustrates components of a system 10 for producing baked goods. The system 10 comprises a kneader 12 with one or more dough hooks 14 for mixing flour (containing gluten), water and other ingredients of the dough 16. After mixing, the dough 16 is removed from the kneader 12 and undergoes one or more shaping and/or dividing steps. As shown in Fig. 1, the dough 16 may be placed on a conveyer 18 that transports the dough 16 to a shaper/divider 20. As mechanical force has been exerted on the dough 16 in the kneader 12, shaping and dividing (including deformation of) the dough 16 may be facilitated by a preceding dough relaxation.

As shown in Fig. 1, dough relaxation may be performed as a continuous process where the dough 16 is passed (at constant speed) through a dough relaxation device 22 which applies an (alternating) electromagnetic field or supplies a voltage/current to the dough 16. For example, the dough relaxation device 22 may apply an AC voltage (e.g., 50 Hz) in the range of 80 V to 300 V to a dough strand having a width of 0.1 m, wherein the strand is transported at a speed that ensures that the dough 16 is exposed to the alternating electromagnetic field or to the voltage for a defined period of time (e.g., a period in the range of 1-5 s).

**Table 1: Preferable Relaxation Parameters**

| Voltage | 110 V | 140 V | 170 V | 200 V | 230 V | 260 V |
|---|---|---|---|---|---|---|
| Duration | 2-5 s | 2-5 s | 1-5 s | 1-3 s | 1-3 s | 1-2 s |

By increasing the frequency, lower voltages and/or shorter durations may be achieved. However, the invention is not limited to an alternating electromagnetic field but may also be practiced by applying (short) electromagnetic field pulses to the dough 16.

As illustrated in Fig. 1, applying the alternating electromagnetic field or supplying the voltage to the dough 16 causes a decrease 24a of the resistance of the dough 16 against mechanical deformation, as the dough 16 passes through the dough relaxation device 22. Moreover, applying the alternating electromagnetic field or supplying the voltage to the dough 16 causes an increase in ductility. After having passed the dough 16 through the dough relaxation device 22 the dough 16 may be fed to the shaper/divider 20. As the shaper/divider 20 also exerts mechanical force on the dough 16, it may be necessary to pass the shaped/divided dough 16 through another (or the same) dough relaxation device 22 to (fully or partially) revert the increase 24b in resistance against deformation and the decrease in ductility (induced by the process step of shaping/dividing the dough by the shaper/divider). When shaping/dividing the dough 16 is finished, the dough 16 may be placed in an oven 26 for baking. The oven 26 may comprise a heating element that heats the air inside the oven 26, wherein the heat is transferred from the air to the dough 16.

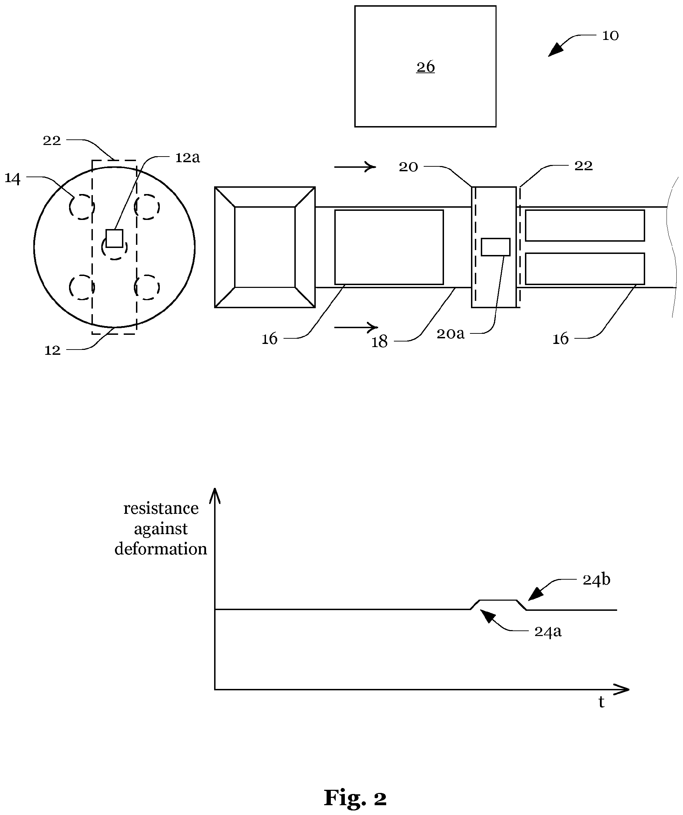

Notably, dough relaxation may not only be performed between steps involving the exertion of mechanical force on the dough 16 (such as kneading, shaping or dividing) but may also be performed during said steps. For example, as shown in Fig. 2, the dough relaxation device 22 may be integrated into the kneader 12 and/or the shaper/divider 20. If the dough relaxation device 22 is integrated into the kneader 12 and/or the shaper/divider 20, the alternating electromagnetic field or the voltage/current may be applied to the dough 16 at recurring intervals (of a set frequency) or in response to a sensed increase in the resistance of the dough 16 against the processing. For example, the dough relaxation device 22 may be provided by the kneader 12 and/or the shaper/divider 20 with a measurement of the resistance of the dough 16 against deformation. For instance, the kneader 12 and/or the shaper/divider 20 may be provided with a sensor 12a, 20a that measures a force required to knead and/or shape/divide the dough 16.

The dough relaxation device 22 may then control the electromagnetic field based on the measured resistance. For example, the dough relaxation device 22 may determine an amplitude of the electromagnetic field, a frequency of the electromagnetic field and a duration for which the electromagnetic field is applied to the dough 16 based on the measured resistance. Notably, measuring the resistance of the dough 16 against deformation and applying the electromagnetic field may be performed in parallel or in sequence. For instance, the resistance of the dough 16 against deformation may be measured at an end of a kneading and/or shaping/dividing step and the measured resistance may be used to control an electromagnetic field applied to the dough 16 after the kneading and/or shaping/dividing step. In another example, the resistance of the dough 16 against deformation may be measured during a kneading and/or shaping/dividing step and the measured resistance may be used to control an electromagnetic field applied to the dough 16 during the kneading and/or shaping/dividing step. For instance, each time the resistance approaches or increases an upper limit, the electromagnetic field may be applied to the dough 16.

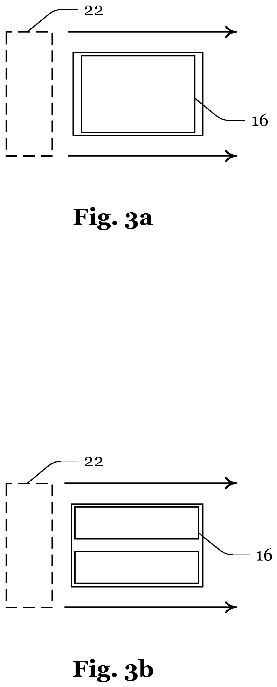

As illustrated in Fig. 3a and Fig. 3b, the dough relaxation device 22 may also be used as a stand-alone device 22. For example, a dough 16 withdrawn from a kneader 12 or a shaper/divider 20 and requiring relaxation may be placed on a support and the dough relaxation device 22 may be moved past the dough 16 while applying an alternating electromagnetic field or supplying a voltage/current to the dough 16. Notably, a relative movement between the dough relaxation device 22 and the dough 16 is not mandatory but may be advantageous in view of keeping the size of the dough relaxation device 22 small and achieving relaxation uniformity.

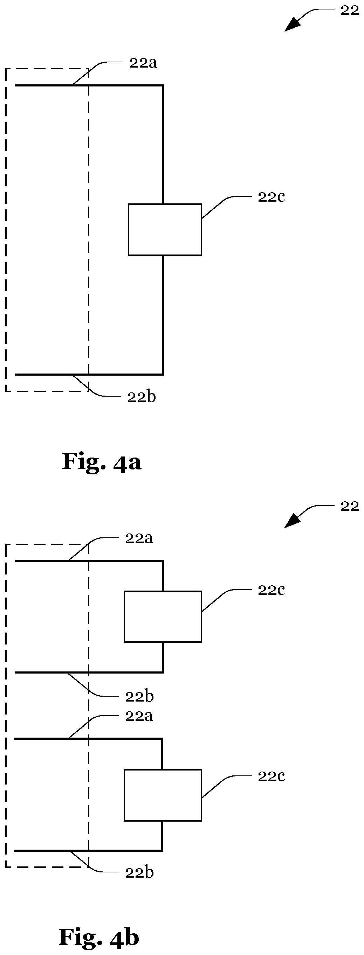

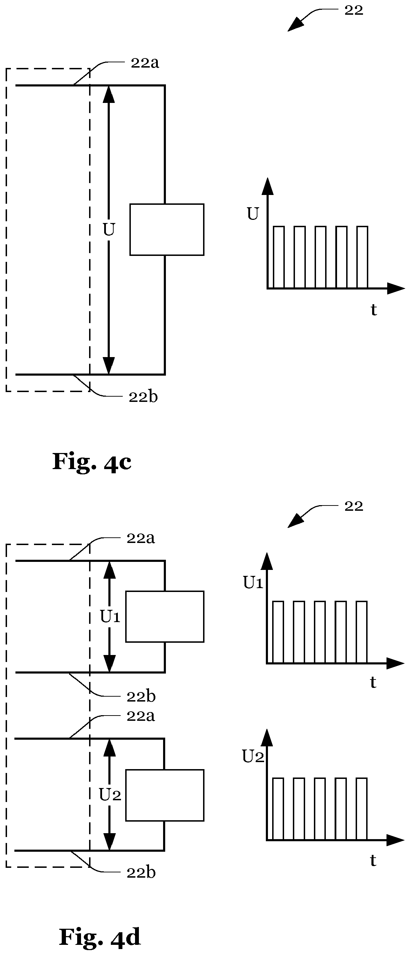

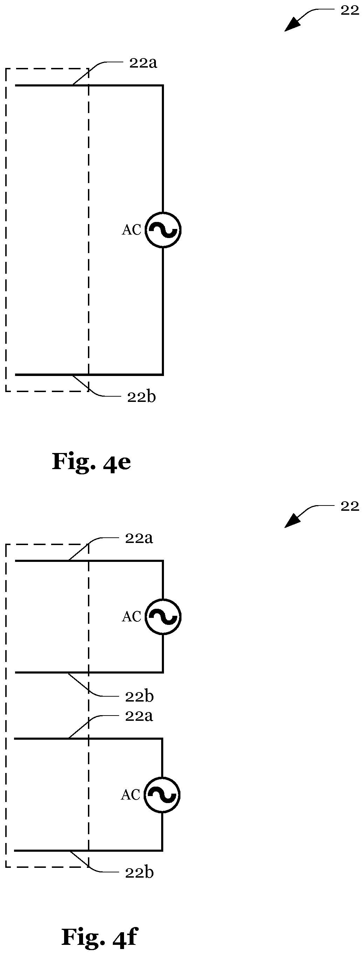

As illustrated in Fig. 4a, the dough relaxation device 22 may comprise two electrodes 22a, 22b that are connected to a power source 22c. As the dough 16 may have been divided, the dough relaxation device 22 may also comprise multiple electrode pairs 22a, 22b connected to different power sources 22c as illustrated in Fig. 4b (or to the same power source 22c). As illustrated in Fig. 4c and Fig. 4d, the power source 22c may apply voltage pulses to the electrodes 22a and 22b. Moreover, as illustrated in Fig. 4e and Fig. 4f, the power source 22c may be an AC power source (e.g., 50 Hz).

The electrodes 22a, 22b may be configured to be in mechanical contact with the dough 16. To avoid sticking, the electrodes 22a, 22b may be made of a metal which is provided with a non-stick coating. Moreover, the dough relaxation device 22 may be provided with a cleaning module that (mechanically) cleans the electrodes 22a, 22b from dough that sticks to the electrodes 22a, 22b.

Notably, limiting the duration for which the alternating electromagnetic field or the voltage/current is applied to the dough 16 may reduce or even avoid sticking such that the duration may be reduced if sticking occurs. For example, the cleaning module may provide a signal indicating whether or to what degree sticking occurs and the dough relaxation device 22 may reduce the duration for which the alternating electromagnetic field or the voltage/current is applied to the dough 16 in response to excessive sticking. In another example, the composition of the dough 16 may be adapted in response to excessive sticking taking place at the electrodes 22a, 22b of the dough relaxation device 22.

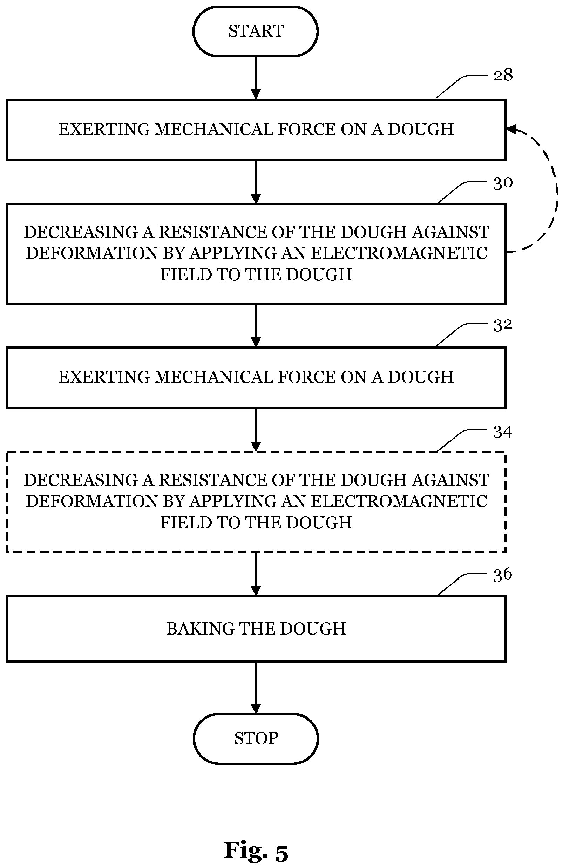

Fig. 5 shows a flow-chart of the process which basically comprises the steps 28, 30 of exerting mechanical force on a dough 16 and applying an (alternating) electromagnetic field or supplying a voltage/current to the dough 16. As described above, said steps 28, 30 may be performed consecutively but may also be performed concurrently. Moreover, the step 30 of applying an alternating electromagnetic field or supplying a voltage/current to the dough 16 may be interspersed between consecutive steps 28 und 32 of exerting mechanical force on the dough 16 to reduce the overall dough processing time by avoiding the need for periods at which the dough 16 is at rest. After the final step 32 of exerting mechanical force on the dough 16, the dough 16 may be baked with or without undergoing a further step 34 of applying an electromagnetic field to the dough 16.

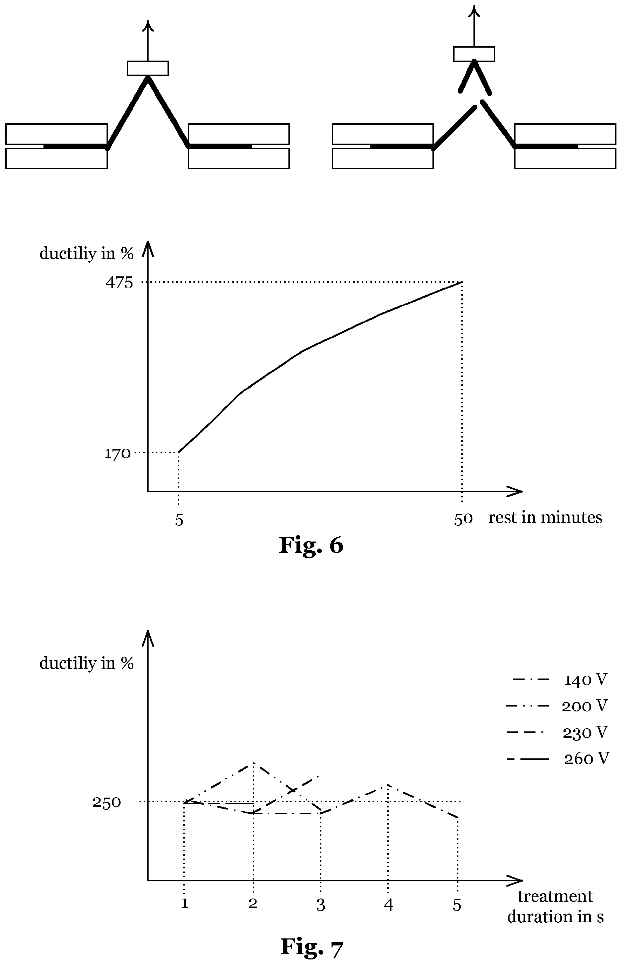

In this regard, Fig. 6 shows a diagram illustrating the effect of a period of rest on the ductility of the dough 16 (i.e. the extensibility of the dough 16 until the dough 16 tears apart, as illustrated in the upper part of Fig. 6). As shown in Fig. 6, the ductility constantly increases with the duration of the rest. As shown in Fig. 7 the same effect as letting the dough 16 rest for about fifteen minutes can be achieved by supplying an alternating voltage to the dough 16 for a couple of seconds.

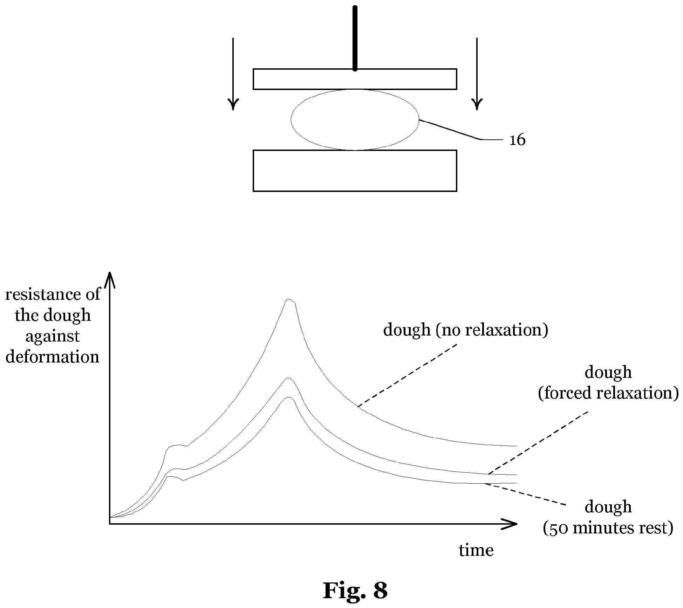

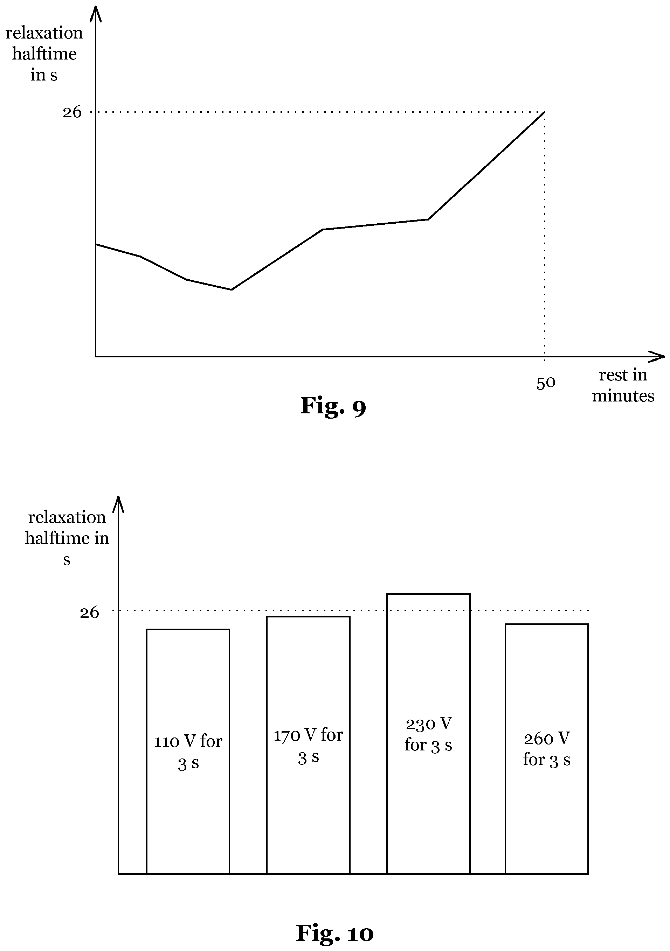

As illustrated in Fig. 8, the resistance of the dough 16 when compressed between two plates at constant speed is substantially the same when comparing a dough 16 that has had a period of rest for about 50 minutes and a dough 16 that has been treated in accordance with the parameters indicated in Table 1. As shown in Fig. 9 an Fig. 10, this also applies to the relaxation halftime which has been measured by shearing the dough 16 at a shear rate of 0.02 s⁻¹ until a strain of 100 % is reached and which is substantially the same when comparing a dough 16 that has had a period of rest for about 50 minutes and a dough 16 that has been treated in accordance with the process of Fig. 5.

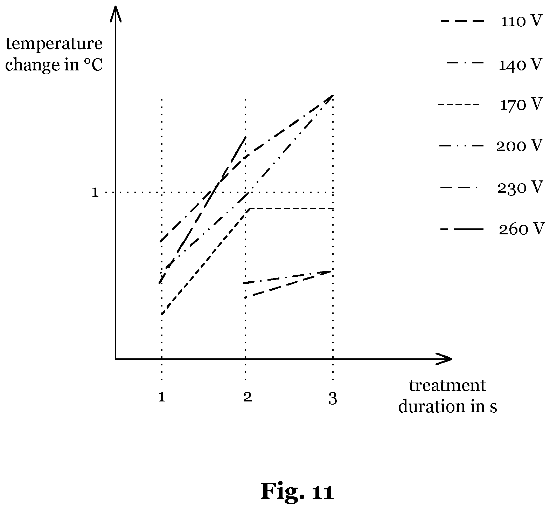

As illustrated in Fig. 11, applying an alternating voltage to a strand of dough 16 with a width of about 0.1 m for a couple of seconds (e.g., less than 5 s) increases the temperature of the dough 16 only by a few degrees Celsius (e.g., less than 2°C) such that no cooling of the dough 16 is required.

Accordingly, treating the dough 16 in accordance with the process shown in Fig. 5 allows achieving substantially the same mechanical properties as letting the dough 16 rest for a considerable amount of time (e.g., 10 minutes or above) and allows to instantly proceed with consecutive processing steps such as, for example, shaping and dividing.

### LIST OF REFERENCE NUMERALS

- 10: system
- 12: kneader
- 12a: sensor
- 14: dough hook
- 16: dough
- 18: conveyor
- 20: shaper/divider
- 20: sensor
- 22: dough relaxation device
- 22a: electrode
- 22b: electrode
- 22c: power source
- 24a: modulus decrease
- 24b: modulus increase
- 26: oven
- 28: process step
- 30: process step
- 32: process step
- 34: process step
- 36: process step

## Claims

1. A method of reducing a time required for processing a dough (16) which comprises gluten and which is provided for producing baked goods by speeding-up dough relaxation, the method comprising:
a step of exerting (28) mechanical force on the dough (16);
decreasing (24a) a resistance of the dough (16) against deformation after or during said step of exerting (28) mechanical force on the dough (16) by applying (30) an electromagnetic field to the dough (16);
another step of exerting (32) mechanical force on the dough (16) after applying (30) the electromagnetic field to the dough (16); and
baking (36) the dough (16) after said other step of exerting (32) mechanical force on the dough (16);
wherein the steps of exerting (28, 32) mechanical force on the dough (16) are selected from a group consisting of kneading, shaping and dividing the dough (16);
wherein the electromagnetic field is applied to the dough (16) for a period of less than 30 s, preferably of less than 15 s, and more preferably of less than 5 s; and
wherein the dough (16) rests less than 10 minutes, preferably less than 5 minutes, and more preferably less than 1 minute between the steps of exerting (28, 32) mechanical force on the dough (16).

2. The method of claim 1,
wherein applying (30) an electromagnetic field to the dough (16) comprises applying an alternating electromagnetic field to the dough (16);
wherein the alternating electromagnetic field has an amplitude in a range of 0.1 kV/m to 5 kV/m, preferably in a range of 0.8 kV/m to 3 kV/m; and/or
wherein the alternating electromagnetic field has a frequency of 20 Hz or more, of 50Hz or more, of 100 Hz or more, of 500 Hz or more, of 1 kHz or more, of 1 MHz or more, or of 1 GHz or more.

3. The method of claim 2,
wherein applying (30) an alternating electromagnetic field to the dough (16) comprises supplying an alternating voltage or an alternating current to electrodes (22a, 22b) which are in mechanical contact with the dough (16).

4. The method of claim 3,
wherein an amplitude of the voltage is between 10 V and 500 V, preferably between 80 V and 300 V; or
wherein an amplitude of the current is between 0.1 A and 10 A, preferably between 0.5 A and 5.2 A.

5. The method of any one of claims 1 to 4,
wherein baking (36) the dough (16) is performed by heating the dough (16) through hot air at least partially surrounding the dough (16).

6. The method of any one of claims 1 to 5, further comprising:
measuring the resistance of the dough (16) against deformation; and
controlling the electromagnetic field based on the measured resistance.

7. The method of claim 6,
wherein controlling the electromagnetic field based on the measured resistance comprises determining a parameter selected from the group consisting of an amplitude of the electromagnetic field, a frequency of the electromagnetic field and a duration for which the electromagnetic field is applied to the dough (16).

8. The method of any one of claims 1 to 7,
wherein the electromagnetic field is applied to the dough (16) for a period of less than 1 s, preferably of less than 0.1 s, and more preferably of less than 0.01 s.

9. The method of any one of claims 1 to 8, wherein the extensibility of the dough (16) is:
decreased by the step of exerting (28, 32) mechanical force on the dough (16) by a value A; and
increased by the step of applying (30) an electromagnetic field to the dough (16) by a value B;
wherein B is more than 50 %, preferably more than 75 %, and more preferably more than 90 % of A.

10. A dough relaxation device (22), comprising:
two electrodes (22a, 22b);
wherein the dough relaxation device (22) is configured to decrease (24a) a resistance of a dough (16) comprising gluten against deformation by applying an electromagnetic field to the dough (16);
wherein the dough relaxation device (22) is configured to apply the electromagnetic field for a period of less than 30 s, preferably of less than 15 s, and more preferably of less than 5 s.

11. The dough relaxation device (22) of claim 10,
wherein the dough relaxation device (22) is configured to apply an alternating electromagnetic field to the dough (16);
wherein the alternating electromagnetic field has an amplitude in a range of 0.1 kV/m to 5 kV/m, preferably in a range of 0.8 kV/m to 3 kV/m; and/or
wherein the alternating electromagnetic field has a frequency of 20 Hz or more, of 50Hz or more, of 100 Hz or more, of 500 Hz or more, of 1 kHz or more, of 1 MHz or more, or of 1 GHz or more.

12. The dough relaxation device (22) of claim 10 or 11,
wherein the dough relaxation device (22) is configured to supply an alternating voltage or an alternating current to the two electrodes (22a, 22b);
wherein an amplitude of the voltage is between 10 V and 500 V, preferably between 80 V and 300 V; or
wherein an amplitude of the current is between 0.1 A and 10 A, preferably between 0.5 A and 5.2 A.

13. The dough relaxation device (22) of any one of claims 10 to 12,
wherein the dough relaxation device (22) is configured to apply the electromagnetic field to the dough (16) for a period of less than 1 s, preferably of less than 0.1 s, and more preferably of less than 0.01 s.

14. A system (10) for producing baked goods, comprising:
a dough relaxation device (22) of any one of claims 10 to 13; and
a dough kneader, shaper, or divider (12, 20) arranged upstream of the dough relaxation device (22);
wherein the dough relaxation device (22) is configured to increase an extensibility of the dough (16) by a value B, wherein B is more than 50 %, preferably more than 75 %, and more preferably more than 90 % of an extensibility decrease A caused by the dough kneader, shaper, or divider (12, 20).

15. The system (10) for producing baked goods of claim 14, further comprising:
a sensor (12a, 20a) for measuring the resistance of the dough (16) against deformation;
wherein the dough relaxation device (22) is configured to control the electromagnetic field based on the measured resistance.

## Patentansprüche

1. Verfahren zum Reduzieren einer Zeit, die zum Verarbeiten eines Teigs (16) erforderlich ist, der Gluten umfasst und zum Herstellen von Backwaren bereitgestellt wird, durch Beschleunigung von Teigentspannung, wobei das Verfahren umfasst:
einen Schritt des Ausübens (28) einer mechanischen Kraft auf den Teig (16);
Verringern (24a) eines Widerstands des Teigs (16) gegen Verformung nach oder während des Schritts des Ausübens (28) einer mechanischen Kraft auf den Teig (16) durch Anlegen (30) eines elektromagnetischen Feldes an den Teig (16);
einen weiteren Schritt des Ausübens (32) einer mechanischer Kraft auf den Teig (16) nach Anlegen (30) des elektromagnetischen Feldes an den Teig (16); und
Backen (36) des Teigs (16) nach dem weiteren Schritt des Ausübens (32) einer mechanischen Kraft auf den Teig (16);
wobei die Schritte des Ausübens (28, 32) einer mechanischen Kraft auf den Teig (16) aus einer Gruppe bestehend aus Kneten, Formen und Teilen des Teigs (16) ausgewählt werden;
wobei das elektromagnetische Feld für einen Zeitraum von weniger als 30 s, vorzugsweise von weniger als 15 s und bevorzugter von weniger als 5 s an den Teig (16) angelegt wird; und
wobei der Teig (16) zwischen den Schritten des Ausübens (28, 32) einer mechanischen Kraft auf den Teig (16) weniger als 10 Minuten, vorzugsweise weniger als 5 Minuten und bevorzugter weniger als 1 Minute ruht.

2. Verfahren nach Anspruch 1,
wobei das Anlegen (30) eines elektromagnetischen Feldes an den Teig (16) das Anlegen eines elektromagnetischen Wechselfeldes an den Teig (16) umfasst;
wobei das elektromagnetische Wechselfeld eine Amplitude in einem Bereich von 0,1 kV/m bis 5 kV/m, vorzugsweise in einem Bereich von 0,8 kV/m bis 3 kV/m aufweist; und/oder
wobei das elektromagnetische Wechselfeld eine Frequenz von 20 Hz oder mehr, von 50 Hz oder mehr, von 100 Hz oder mehr, von 500 Hz oder mehr, von 1 kHz oder mehr, von 1 MHz oder mehr oder von 1 GHz oder mehr aufweist.

3. Verfahren nach Anspruch 2,
wobei das Anlegen (30) eines elektromagnetischen Wechselfeldes an den Teig (16) das Anlegen einer Wechselspannung oder eines Wechselstroms an Elektroden (22a, 22b) umfasst, die mit dem Teig (16) in mechanischem Kontakt vorliegen.

4. Verfahren nach Anspruch 3,
wobei eine Amplitude der Spannung zwischen 10 V und 500 V, vorzugsweise zwischen 80 V und 300 V liegt; oder
wobei eine Amplitude des Stroms zwischen 0,1 A und 10 A, vorzugsweise zwischen 0,5 A und 5,2 A liegt.

5. Verfahren nach einem der Ansprüche 1 bis 4,
wobei das Backen (36) des Teigs (16) durch Erwärmen des Teigs (16) durch Heißluft durchgeführt wird, die den Teig (16) mindestens teilweise umgibt.

6. Verfahren nach einem der Ansprüche 1 bis 5, weiter umfassend:
Messen des Widerstands des Teigs (16) gegen Verformung; und
Steuern des elektromagnetischen Feldes basierend auf dem gemessenen Widerstand.

7. Verfahren nach Anspruch 6,
wobei das Steuern des elektromagnetischen Feldes basierend auf dem gemessenen Widerstand das Bestimmen eines Parameters umfasst, der aus der Gruppe ausgewählt ist, die aus einer Amplitude des elektromagnetischen Feldes, einer Frequenz des elektromagnetischen Feldes und einer Dauer besteht, für die das elektromagnetische Feld an den Teig (16) angelegt wird.

8. Verfahren nach einem der Ansprüche 1 bis 7,
wobei das elektromagnetische Feld für einen Zeitraum von weniger als 1 s, vorzugsweise von weniger als 0,1 s und bevorzugter von weniger als 0,01 s an den Teig (16) angelegt wird.

9. Verfahren nach einem der Ansprüche 1 bis 8, wobei die Dehnbarkeit des Teigs (16):
durch den Schritt des Ausübens (28, 32) einer mechanischer Kraft auf den Teig (16) um einen Wert A verringert wird; und
durch den Schritt des Anlegens (30) eines elektromagnetischen Feldes an den Teig (16) um einen Wert B erhöht wird;
wobei B mehr als 50 %, vorzugsweise mehr als 75 % und bevorzugter mehr als 90 % von A beträgt.

10. Teigentspannungsvorrichtung (22), umfassend:
zwei Elektroden (22a, 22b);
wobei die Teigentspannungsvorrichtung (22) konfiguriert ist, um den Widerstand eines Gluten umfassenden Teigs (16) gegen Verformung durch Anlegen eines elektromagnetischen Feldes an den Teig (16) zu verringern (24a);
wobei die Teigentspannungsvorrichtung (22) konfiguriert ist, um das elektromagnetische Feld für einen Zeitraum von weniger als 30 s, vorzugsweise von weniger als 15 s und bevorzugter von weniger als 5 s anzulegen.

11. Teigentspannungsvorrichtung (22) nach Anspruch 10,
wobei die Teigentspannungsvorrichtung (22) konfiguriert ist, um ein elektromagnetisches Wechselfeld an den Teig (16) anzulegen;
wobei das elektromagnetische Wechselfeld eine Amplitude in einem Bereich von 0,1 kV/m bis 5 kV/m, vorzugsweise in einem Bereich von 0,8 kV/m bis 3 kV/m aufweist; und/oder
wobei das elektromagnetische Wechselfeld eine Frequenz von 20 Hz oder mehr, von 50 Hz oder mehr, von 100 Hz oder mehr, von 500 Hz oder mehr, von 1 kHz oder mehr, von 1 MHz oder mehr oder von 1 GHz oder mehr aufweist.

12. Teigentspannungsvorrichtung (22) nach Anspruch 10 oder 11,
wobei die Teigentspannungsvorrichtung (22) konfiguriert ist, den zwei Elektroden (22a, 22b) eine Wechselspannung oder einen Wechselstrom zuzuführen;
wobei eine Amplitude der Spannung zwischen 10 V und 500 V, vorzugsweise zwischen 80 V und 300 V liegt; oder
wobei eine Amplitude des Stroms zwischen 0,1 A und 10 A, vorzugsweise zwischen 0,5 A und 5,2 A liegt.

13. Teigentspannungsvorrichtung (22) nach einem der Ansprüche 10 bis 12,
wobei die Teigentspannungsvorrichtung (22) konfiguriert ist, um das elektromagnetische Feld für einen Zeitraum von weniger als 1 s, vorzugsweise von weniger als 0,1 s und bevorzugter von weniger als 0,01 s an den Teig (16) anzulegen.

14. System (10) zum Herstellen von Backwaren, umfassend:
eine Teigentspannungsvorrichtung (22) nach einem der Ansprüche 10 bis 13; und
einen Teigkneter, -former oder -teiler (12, 20), der stromaufwärts der Teigentspannungsvorrichtung (22) gelegen angeordnet ist;
wobei die Teigentspannungsvorrichtung (22) konfiguriert ist, eine Dehnbarkeit des Teigs (16) um einen Wert B zu erhöhen, wobei B mehr als 50 %, vorzugsweise mehr als 75 % und bevorzugter mehr als 90 % einer Dehnbarkeitsverringerung A ist, die durch den Teigkneter, -former oder -teiler (12, 20) verursacht wird.

15. System (10) zum Herstellen von Backwaren nach Anspruch 14, weiter umfassend:
einen Sensor (12a, 20a) zum Messen des Widerstands des Teigs (16) gegen Verformung;
wobei die Teigentspannungsvorrichtung (22) konfiguriert ist, um das elektromagnetische Feld basierend auf dem gemessenen Widerstand zu steuern.

## Revendications

1. Procédé de réduction d'un temps nécessaire au traitement d'une pâte (16) qui comprend du gluten et qui est destiné à la production de produits de boulangerie en accélérant l'assouplissement de pâte, le procédé comprenant :
une étape d'application (28) d'une force mécanique sur la pâte (16) ;
la diminution (24a) d'une résistance de la pâte (16) à la déformation après ou pendant ladite étape d'application (28) d'une force mécanique sur la pâte (16) par l'application (30) d'un champ électromagnétique à la pâte (16) ;
une autre étape d'application (32) d'une force mécanique sur la pâte (16) après l'application (30) du champ électromagnétique à la pâte (16) ; et
la cuisson (36) de la pâte (16) après ladite autre étape d'application (32) d'une force mécanique sur la pâte (16) ;
dans lequel les étapes d'application (28, 32) d'une force mécanique sur la pâte (16) sont sélectionnées dans un groupe consistant en le pétrissage, le façonnage et la division de la pâte (16) ;
dans lequel le champ électromagnétique est appliqué à la pâte (16) pendant une période inférieure à 30 s, de préférence inférieure à 15 s, et plus préférentiellement inférieure à 5 s ; et
dans lequel la pâte (16) repose moins de 10 minutes, de préférence moins de 5 minutes, et plus préférentiellement moins de 1 minute entre les étapes d'application (28, 32) d'une force mécanique sur la pâte (16).

2. Procédé selon la revendication 1,
dans lequel l'application (30) d'un champ électromagnétique à la pâte (16) comprend l'application d'un champ électromagnétique alternatif à la pâte (16) ;
dans lequel le champ électromagnétique alternatif présente une amplitude dans une plage de 0,1 kV/m à 5 kV/m, de préférence dans une plage de 0,8 kV/m à 3 kV/m ; et/ou
dans lequel le champ électromagnétique alternatif présente une fréquence de 20 Hz ou plus, de 50 Hz ou plus, de 100 Hz ou plus, de 500 Hz ou plus, de 1 kHz ou plus, de 1 MHz ou plus, ou de 1 GHz ou plus.

3. Procédé selon la revendication 2,
dans lequel l'application (30) d'un champ électromagnétique alternatif à la pâte (16) comprend la fourniture d'une tension alternative ou d'un courant alternatif à des électrodes (22a, 22b) qui sont en contact mécanique avec la pâte (16).

4. Procédé selon la revendication 3,
dans lequel une amplitude de la tension est comprise entre 10 V et 500 V, de préférence entre 80 V et 300 V ; ou
dans lequel une amplitude du courant est comprise entre 0,1 A et 10 A, de préférence entre 0,5 A et 5,2 A.

5. Procédé selon l'une quelconque des revendications 1 à 4,
dans lequel la cuisson (36) de la pâte (16) est réalisée par chauffage de la pâte (16) via de l'air chaud entourant au moins partiellement la pâte (16).

6. Procédé selon l'une quelconque des revendications 1 à 5, comprenant en outre :
la mesure de la résistance de la pâte (16) à la déformation ; et
la commande du champ électromagnétique sur la base de la résistance mesurée.

7. Procédé selon la revendication 6,
dans lequel la commande du champ électromagnétique sur la base de la résistance mesurée comprend la détermination d'un paramètre sélectionné dans le groupe consistant en une amplitude du champ électromagnétique, une fréquence du champ électromagnétique et une durée pendant laquelle le champ électromagnétique est appliqué à la pâte (16).

8. Procédé selon l'une quelconque des revendications 1 à 7,
dans lequel le champ électromagnétique est appliqué à la pâte (16) pendant une période inférieure à 1 s, de préférence inférieure à 0,1 s, et plus préférentiellement inférieure à 0,01 s.

9. Procédé selon l'une quelconque des revendications 1 à 8, dans lequel l'extensibilité de la pâte (16) est :
diminuée par l'étape d'application (28, 32) d'une force mécanique sur la pâte (16) d'une valeur A ; et
augmentée par l'étape d'application (30) d'un champ électromagnétique à la pâte (16) d'une valeur B ;
dans lequel B équivaut à plus de 50 %, de préférence à plus de 75 %, et plus préférentiellement à plus de 90 % de A.

10. Dispositif d'assouplissement de pâte (22), comprenant :
deux électrodes (22a, 22b) ;
dans lequel le dispositif d'assouplissement de pâte (22) est configuré pour diminuer (24a) une résistance d'une pâte (16) comprenant du gluten à la déformation par application d'un champ électromagnétique à la pâte (16) ;
dans lequel le dispositif d'assouplissement de pâte (22) est configuré pour appliquer le champ électromagnétique pendant une période inférieure à 30 s, de préférence inférieure à 15 s, et plus préférentiellement inférieure à 5 s.

11. Dispositif d'assouplissement de pâte (22) selon la revendication 10,
dans lequel le dispositif d'assouplissement de pâte (22) est configuré pour appliquer un champ électromagnétique alternatif à la pâte (16) ;
dans lequel le champ électromagnétique alternatif présente une amplitude dans une plage de 0,1 kV/m à 5 kV/m, de préférence dans une plage de 0,8 kV/m à 3 kV/m ; et/ou
dans lequel le champ électromagnétique alternatif présente une fréquence de 20 Hz ou plus, de 50 Hz ou plus, de 100 Hz ou plus, de 500 Hz ou plus, de 1 kHz ou plus, de 1 MHz ou plus, ou de 1 GHz ou plus.

12. Dispositif d'assouplissement de pâte (22) selon la revendication 10 ou 11,
dans lequel le dispositif d'assouplissement de pâte (22) est configuré pour fournir une tension alternative ou un courant alternatif aux deux électrodes (22a, 22b) ;
dans lequel une amplitude de la tension est comprise entre 10 V et 500 V, de préférence entre 80 V et 300 V ; ou
dans lequel une amplitude du courant est comprise entre 0,1 A et 10 A, de préférence entre 0,5 A et 5,2 A.

13. Dispositif d'assouplissement de pâte (22) selon l'une quelconque des revendications 10 à 12,
dans lequel le dispositif d'assouplissement de pâte (22) est configuré pour appliquer le champ électromagnétique à la pâte (16) pendant une période inférieure à 1 s, de préférence inférieure à 0,1 s, et plus préférentiellement inférieure à 0,01 s.

14. Système (10) pour produire des produits de boulangerie, comprenant :
un dispositif d'assouplissement de pâte (22) selon l'une quelconque des revendications 10 à 13 ; et
un pétrin, une façonneuse ou un diviseur de pâte (12, 20) agencé en amont du dispositif d'assouplissement de pâte (22) ;
dans lequel le dispositif d'assouplissement de pâte (22) est configuré pour augmenter une extensibilité de la pâte (16) d'une valeur B, dans lequel B équivaut à plus de 50 %, de préférence à plus de 75 %, et plus préférentiellement à plus de 90 % d'une diminution d'extensibilité A causée par le pétrin, la façonneuse ou le diviseur de pâte (12, 20).

15. Système (10) pour produire des produits de boulangerie selon la revendication 14, comprenant en outre :
un capteur (12a, 20a) pour mesurer la résistance de la pâte (16) à la déformation ;
dans lequel le dispositif d'assouplissement de pâte (22) est configuré pour commander le champ électromagnétique sur la base de la résistance mesurée.
